# EUROPÄISCHE PATENTSCHRIFT

(11) **EP 1 384 516 B1**
(45) Veröffentlichungstag und Bekanntmachung des Hinweises auf die Patenterteilung: **16.11.2011**
(21) Anmeldenummer: 03016336.4
(22) Anmeldetag: 18.07.2003
(51) Int. Cl.: B05B 5/04, B05B 3/10, F01D 9/02, F01D 15/06

(54) **Turbinenmotor eines Rotationszerstäubers**
Turbine for a rotary atomizer
Turbine pour atomiseur rotatif

(30) Priorität: 22.07.2002 DE 10233199
(43) Veröffentlichungstag der Anmeldung: 28.01.2004
(73) Patentinhaber: Dürr Systems GmbH, 74321 Bietigheim-Bissingen (DE)
(72) Erfinder: Baumann, Michael, 74223 Flein (DE); Herre, Frank, 71739 Oberriexingen (DE); Nolte, Hans-Jürgen, 70565 Stuttgart (DE); Krumma, Harry, 74357 Bönnigheim (DE); Giuliano, Stefano, 70839 Gerlingen (DE); Lind, Björn Lind Gas Bearing Technology AB, 411 18 Göteborg (SE)
(74) Vertreter: Heusler, Wolfgang

(56) Entgegenhaltungen:
- EP-A- 0 984 136
- EP-A1- 0 567 436
- EP-A1- 0 761 977
- FR-A- 969 291
- FR-A1- 2 584 314
- GB-A- 885 367
- GB-A- 1 474 134
- GB-A- 191 421 322
- RU-C1- 2 008 435
- US-A- 3 968 935

## Beschreibung

Die Erfindung betrifft einen als Antrieb für den Glockenteller eines Rotationszerstäubers verwendbaren Turbinenmotor gemäß dem Oberbegriff des Anspruchs 1. Ferner betrifft die Erfindung einen Rotationszerstäuber mit einem solchen Turbinenmotor.

Insbesondere handelt es sich um Hochrotationszerstäuber für die elektrostatische Serienbeschichtung von Werkstücken wie beispielsweise Fahrzeugkarossen. Zum Antrieb des Glockentellers derartiger Zerstäuber (DE 43 06 800 C2, EP 0 796 663 B1) dienen bekanntlich mit Druckluft betriebene Radialturbinen, deren den Glockenteller tragende Hohlwelle in einem Luftlager rotiert. Die Radialturbine kann entweder tangential angeströmt oder radial durchströmt werden. Im letztgenannten Fall besteht das Turbinenrad aus einer in einem weitgehend geschlossenen zylindrischen Innenraum der Lagereinheit der Antriebwelle rotierenden Scheibe, der auf ihrer einen Stirnfläche in der Nähe des Umfangs Turbinenblätter angeformt sind. Die Antriebsluft durchströmt die Turbinenblätter radial in einem Kanal, der auf seiner einen Seite von dem Turbinenrad und im bekannten Fall auf seiner entgegengesetzten Seite durch einen feststehenden Teil der Lagereinheit begrenzt ist. Die Antriebsluft gelangt in diesen Antriebskanal durch einen oder mehrere Zuleitungskanäle, die in einer Düse münden, deren im Querschnitt z.B. viereckige Öffnung im bekannten Fall den kleinsten Querschnitt der jeweiligen Antriebsluftversorgung darstellt. Zwischen den axialen Enden der Turbinenschaufeln und dem feststehenden Gehäuseteil der Lagereinheit besteht ein Luftspalt, durch den ein Teil der Antriebsluft für den Antrieb verloren geht. Nachteilig ist auch eine turbulente Grenzschicht, die sich bei der betrachteten bekannten Radialturbine zwischen der strömenden Antriebsluft und dem feststehenden Gehäuseteil bildet und hohe Reibungsverluste verursacht. Infolgedessen ist die Leistungsfähigkeit der bekannten Radialturbine begrenzt.

Ein Rotationszerstäuber für die Serienbeschichtung von Werkstücken mit einem an einer Hohlwelle montierten Glockenteller, der von einem Turbinenrad mit radial angeströmten Schaufelelementen angetrieben wird, ist auch aus EP 0 567 436 A1 bekannt.

Aus US 3 968 935 A ist eine konvergierende und divergierende Düse eines Turbinenmotors für Überschallexpansion des Antriebsfluids bekannt, der sich beispielsweise als Antrieb einer Flüssigkeitspumpe in Flugzeugen eignet.

Aus GB 1 474 134 A ist ein mit Druckluft betriebener Turbinenmotor bekannt, der als Spindelantrieb in Textilmaschinen mit hoher Drehzahl dient. Das am Ende der Antriebswelle dieses Motors befestigte Turbinenrad hat auf seiner der Welle abgewandten Stirnfläche Schaufelelemente, auf die zwei einander gegenüberliegende Düseneinlässe gerichtet sind.

Aus EP 0 984 136 A ist ein Turboantrieb für manuelle Werkzeuge mit einem Turbinenrad bekannt, auf dessen Schaufelelemente radial innerhalb des Turbinenradumfangs angeordnete Düsen mit sich änderndem Querschnitt gerichtet sind.

Der Erfindung liegt die Aufgabe zugrunde, einen Turbinenmotor für einen Rotationszerstäuber anzugeben, der höhere Antriebsleistungen als bei vergleichbaren bekannten Radialturbinen ermöglicht.

Diese Aufgabe wird durch den in den Patentansprüchen gekennzeichneten Turbinenmotor gelöst.

Durch die Erfindung wird die Turbine strömungstechnisch wesentlich verbessert. Zusätzlich kann dadurch, dass der Antriebskanal nicht wie bisher nur einseitig begrenzt, sondern auch auf der anderen Seite durch ein mitrotierendes Element geschlossen wird, die Antriebsluft den geschlossenen Kanal verlustfrei und reibungsarm durchströmen. Eine zweckmäßige Realisierungsmöglichkeit besteht darin, den Antriebskanal durch eine an dem Turbinenrad und/oder an der Antriebswelle befestigte und mit ihm rotierende Scheibe zu begrenzen, die mindestens eine radial innen liegende Auslassöffnung für die Antriebsluft bilden oder enthalten kann.

Gemäß einem Merkmal der Erfindung soll die Querschnittsfläche der Einlassöffnung, durch die die Antriebsluft aus einem Zuleitungskanal der Lagereinheit in den Antriebskanal der Turbine strömt, größer sein als die Querschnittsfläche des Zuleitungskanals an seiner Stelle kleinsten Querschnitts. Insbesondere kann der Einlass als sogenannte Laval- oder Überschalldüse ausgebildet sein, deren Querschnitt sich zunächst verengt und dann zur Erzeugung von Geschwindigkeiten der Gasströmung erweitert, die zumindest theoretisch im Überschallbereich liegen können. Überraschend wurde festgestellt, dass die sich hieraus im Vergleich mit den bisher üblichen Düsen ergebenden Änderungen der Geschwindigkeit und des Drucks der einströmenden Antriebsluft zu einer wesentlichen Verbesserung der Antriebsleistung der Turbine führen.

Durch die Erfindung kann die Turbine strömungstechnisch optimiert werden, wodurch vor allem höhere Drehzahlen als bisher ermöglicht werden. Bei einem Rotationszerstäuber wird mit der höheren Drehzahl eine höhere Ausflussrate des Beschichtungsmaterials an dem von der Turbine angetriebenen Glockenteller erreicht.

Vorzugsweise beträgt die Masse der gesamten, bekanntlich als modulartige Baueinheit auswechselbaren Motoreinheit (ohne Glockenteller) weniger als 0,8 kg, was bisher nur bei wesentlich leistungsschwächeren Turbinenmotoren der betrachteten Gattung möglich war.

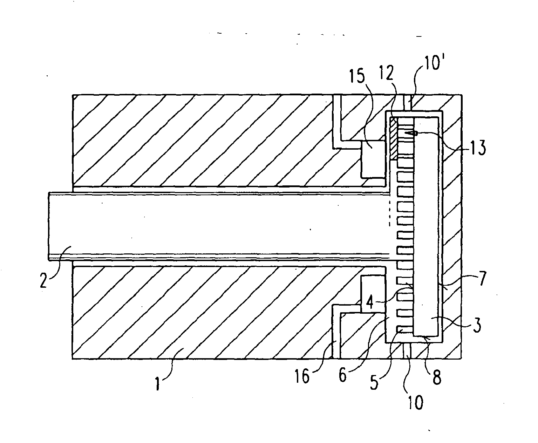

An dem in der Zeichnung dargestellten Ausführungsbeispiel wird die Erfindung näher erläutert. Die Zeichnung zeigt in schematisch vereinfachter Darstellung einen Schnitt durch die Lagereinheit eines Rotationszerstäubers längs der Achse der Antriebswelle.

Die den hier beschriebenen Turbinenmotor bildende Lagereinheit hat ein feststehendes Gehäuse 1, in dem die Antriebswelle 2 in einem zwischen dem Gehäuse und der Welle gebildeten Luftlager rotiert. An dem einen Ende der Antriebswelle 2 ist das scheibenförmige Turbinenrad 3 angeordnet, dem auf einem in der Nähe des Scheibenumfangs liegenden Ringbereich seiner der Welle zugewandten axialen Stirnfläche 4 der radial zu durchströmende Kranz von Turbinenschaufeln 5 angeformt sind. Das Turbinenrad 3 rotiert in einem entsprechend dem Turbinenrad bemessenen zylindrischen Innenraum 6 des Gehäuses 1 mit nahe an die rückseitige ebene Stirnfläche 7 und die zylindrische Umfangsfläche 8 des Turbinenrades angrenzenden Wänden. Auf der entgegengesetzten, in der Zeichnung linken Seite wird der Innenraum 6 von einer weiteren radial verlaufenden Wandfläche des feststehenden Gehäuses 1 begrenzt, die in der Mitte die Öffnung für die Welle 2 bildet und radial außerhalb dieser Öffnung der axialen Stirnfläche 4 des Turbinenrades 3 mit dem dargestellten axialen Abstand von den Enden der Turbinenschaufeln 5 gegenübersteht. Radial außerhalb des Umfangs des Turbinenrades 3 und in axialer Richtung mit den Turbinenschaufeln 5 ausgerichtet mündet in den Innenraum 6 ein Einlass 10 für die Antriebsluft der Turbine, die aus einem durch das Gehäuse 1 verlaufenden Zuleitungskanal kommt. Bei 10' kann ein weiterer Lufteinlass vorgesehen sein. Üblicherweise enthält das Gehäuse 1 getrennte Einlässe für Antriebsluft und Bremsluft (EP-Anmeldung Nr. 02006826.8). Die Antriebswelle kann als Hohlwelle ausgebildet sein, in deren anderes Ende der (nicht dargestellte) Glockenteller des Rotationszerstäubers geschraubt wird.

Soweit sie bisher beschrieben wurde, kann die dargestellte Lagereinheit an sich dem Stand der Technik üblicher Rotationszerstäuber entsprechen. Erfindungsgemäß ist jedoch an dem Turbinenrad 3 auf der Seite der Stirnfläche 4 eine kreisringförmige Abdeckscheibe 12 befestigt, die unmittelbar an den axial von der Stirnfläche 4 abstehenden Enden der Turbinenschaufeln 5 anliegt und mit ihnen rotiert. Zur Verdeutlichung des Unterschiedes zum Stand der Technik ist nur ihre obere Hälfte dargestellt. Die Abdeckscheibe 12 kann beispielsweise an die axial vorspringenden Enden der Turbinenschaufeln 5 angeklebt, angeschweißt oder auf andere Weise an ihnen befestigt sein. Zwischen der Stirnfläche 4 und dieser Abdeckscheibe 12 ist somit ein auf beiden Seiten der Turbinenschaufeln 5 axial geschlossener Antriebskanal 13 gebildet, in dem die aus dem Lufteinlass 10 wenigstens annähernd tangential und ggf. mit einer radial nach innen gerichteten Komponente zugeführte Druckluft verlustfrei und reibungsarm zwischen den Turbinenschaufeln hindurchfließt. Radial innerhalb des die Turbinenschaufeln enthaltenden Ringflächenbereiches fließt die nach Abgabe der Antriebsenergie an die Welle entspannte Luft in eine oder mehrere als Luftauslass dienende Ausnehmungen 15 und Kanäle 16 des Gehäuses 1 ab.

Es ist denkbar, Turbinenschaufeln in dem beschriebenen geschlossenen Antriebskanal nicht nur auf einer, sondern auf beiden Seiten des Turbinenrades vorzusehen. Ebenso ist es möglich, mehr als nur eine Turbine auf einer ihnen gemeinsamen Welle anzuordnen.

Die Querschnittsfläche der Mündungsöffnung am Lufteinlass 10, also am Austrittspunkt der Antriebsluft, ist vorzugsweise größer als der kleinste Querschnitt der davor liegenden Kanäle der Lagereinheit, in der die Antriebsluft in an sich bekannter Weise durch mindestens eine Bohrung in einen ringsegmentförmigen Zuleitungskanal und aus diesem in eine oder mehr Düsen gelangt. Im Gegensatz zu den bisher üblichen Düsen mit sich stetig bis zur Mündungsöffnung verkleinerndem Querschnitt, in denen das strömende Medium nur bis weniger als Schallgeschwindigkeit beschleunigt werden kann, ist der Lufteinlass 10 z.B. als Laval-Düse ausgebildet, deren Querschnitt sich zunächst verengt und sich dann bis zur Mündungsöffnung erweitert, um im erweiterten Düsenteil Überschallgeschwindigkeiten zu erzeugen. Derartige Überschalldüsen können nicht nur für die hier beschriebene Radialturbine, sondern auch für andersartige Turbinenmotoren zur Leistungssteigerung vorteilhaft sein.

Das beschriebene Ausführungsbeispiel kann im Rahmen der Erfindung in verschiedener Hinsicht abgewandelt werden. Wenn das Turbinenrad aus zwei axial voneinander beabstandeten Scheibenelementen besteht, können diese beispielsweise am Umfang durch axiale Stege verbunden sein, zwischen denen Durchlassöffnungen für die Luftströmung freigelassen sind, so dass der zwischen den Scheibenelementen gebildete Antriebskanal auch am Umfang des Turbinenrades teilweise geschlossen ist. Ferner kann sich der Auslass für die Antriebsluft statt radial innerhalb des einen Scheibenelementes an einer beliebigen anderen Stelle und ggf. auch radial außerhalb des Turbinenrades befinden.

Die Erfindung ist darüber hinaus weder auf die beschriebene tangentiale oder radiale Anströmrichtung noch auf zwei beabstandete Scheiben noch auf eine bestimmte Form der Schaufelelemente beschränkt. Beispielsweise besteht die Möglichkeit, die Schaufelelemente zwischen einer geschlossenen zylindrischen Fläche am Umfang des Turbinenrades und einer von ihr radial beabstandeten inneren, ebenfalls geschlossenen zylindrischen Fläche anzuordnen, so dass ein beidseitig radial begrenzter Antriebskanal gebildet ist, wobei die Schaufelelemente axial angeströmt werden und sich Luftauslässe am axial entgegengesetzten Ende des ringförmigen Antriebskanals befinden können.

## Patentansprüche

1. Turbinenmotor eines Rotationszerstäubers einer Anlage für die Serienbeschichtung von Werkstücken
mit einer Antriebswelle (2), die den Glockenteller des Rotationszerstäubers antreiben kann,
mit einer Lagereinheit für die Antriebswelle (2) des Motors, mit einem an der Antriebswelle (2) angeordneten Turbinenrad (3), das in einem Innenraum (6) eines Gehäuses (1) der Lagereinheit rotiert und Schaufelelemente (5) aufweist,
wobei zwischen dem Gehäuse (1) und der Antriebswelle (2) ein Luftlager gebildet ist,
mit einem aus dem Gehäuse (1) radial außerhalb des Umfangs des Turbinenrads (3) in den Innenraum (6) mündenden Einlass (10) für ein Antriebsgas wie insbesondere Druckluft,
und mit einem Auslass für das aus dem Innenraum (6) abfließende Antriebsgas,
**dadurch gekennzeichnet, dass** die Querschnittsfläche der Mündungsöffnung des Einlasses (10), durch die das Antriebsgas aus einem innerhalb der Lagereinheit befindlichen Zuleitungskanal in den die Schaufelelemente (5) enthaltenden Antriebskanal (13) strömt, größer ist als die Querschnittsfläche des Zuleitungskanals an seiner Stelle kleinsten Querschnitts.

2. Turbinenmotor nach Anspruch 1, **dadurch gekennzeichnet, dass** das scheibenförmige Turbinenrad (3) an dem einen Ende der Antriebswelle (2) angeordnet ist, und dass dem Turbinenrad (3) auf einem in der Nähe des Scheibenumfangs liegenden Ringbereich seiner der Antriebswelle (2) zugewandten axialen Stirnfläche (4) der radial zu durchströmende Kranz von Turbinenschaufeln (5) angeformt ist.

3. Turbinenmotor nach einem der vorangehenden Ansprüche, **dadurch gekennzeichnet, dass** mindestens eine Auslassöffnung für das Antriebsgas in dem Gehäuse (1) der Lagereinheit an einer von der Antriebswelle (2) radial entfernten Stelle vorgesehen ist.

4. Turbinenmotor nach Anspruch 3, **dadurch gekennzeichnet, dass** radial durch das Gehäuse (1) führende Auslasskanäle (16) vorgesehen sind.

5. Turbinenmotor nach Anspruch 2, **dadurch gekennzeichnet, dass** die Antriebswelle (2) als Hohlwelle zum Einschrauben des Glockentellers in ihr anderes Ende ausgebildet ist.

6. Turbinenmotor nach einem der vorangehenden Ansprüche, **dadurch gekennzeichnet, dass** die Masse der gesamten, als modulartige Baueinheit auswechselbaren Motoreinheit ohne Glockenteller weniger als 0,8 kg beträgt.

7. Rotationszerstäuber einer Anlage für die Serienbeschichtung von Werkstücken mit einem Turbinenmotor nach einem der vorangehenden Ansprüche.

## Claims

1. Turbine engine of a rotary atomizer of an installation for the serial coating of components
with a drive shaft (2) for driving the bell cup of the rotary atomizer,
with a bearing unit for the drive shaft (2) of the engine, with a turbine wheel arranged at the drive shaft (2) rotating in an interior space (6) of a housing (1) of the bearing unit and comprising blade elements (5),
wherein an air bearing is formed between the housing (1) and the drive shaft (2),
with an inlet (10) for a driving gas, particularly pressurized air, discharging out of the housing (1) radially outwards the circumference of the turbine wheel (3) into the interior space (6),
and with an outlet for the driving gas flowing out of the interior space (6),
**characterized in that** the cross-section of the mouth opening of the inlet (10), through which the driving gas is flowing from a supply channel being arranged outside the bearing unit into the drive channel (13) including the blade elements (5), is greater than the cross-section of the supply channel at its point of the smallest cross-section.

2. Turbine engine according to claim 1, **characterized in that** the disk-shaped turbine wheel (3) is arranged on one end of the drive shaft (2), and that the crown of turbine blades (5) for a radial flow is integrally formed with the turbine wheel (3) on a ring area near the wheel periphery of its axial face (4) facing the drive shaft (2).

3. Turbine engine according to one of the preceding claims, **characterized in that** at least one outlet opening for the driving gas is provided in the housing (1) of the bearing unit at a position radially spaced from the drive shaft (2).

4. Turbine engine according to claim 3, **characterized in that** outlet channels (16) are provided extending radially through the housing (1).

5. Turbine engine according to claim 2, **characterized in that** the drive shaft (2) is formed as a hollow shaft for screwing in the bell cup in its other end.

6. Turbine engine according to one of the preceding claims, **characterized in that** the mass of the entire engine unit being replaceable as a module-type building block without the bell cup is smaller than 0.8 kg.

7. Rotary atomizer of an installation for the serial coating of components with a turbine engine according to one of the preceding claims.

## Revendications

1. Moteur de turbine d'un atomiseur rotatif dans une installation de revêtement en série de pièces,
comportant un arbre d'entraînement (2), qui peut actionner le bol de pulvérisation de l'atomiseur rotatif,
comportant une unité de support pour l'arbre d'entraînement (2) du moteur,
comportant une roue de turbine (3), qui est disposée sur l'arbre d'entraînement (2) et qui tourne dans un espace intérieur (6) d'un carter (1) de l'unité de support et comporte des pales (5), un palier d'air étant formé entre le carter (1) et l'arbre d'entraînement (2),
comportant une entrée (10), débouchant dans l'espace intérieur (6) en sortant du carter (1) radialement à l'extérieur du pourtour de la roue de turbine (3), pour l'admission d'un gaz d'entraînement, tel que, en particulier, l'air comprimé,
et comportant une sortie pour le gaz d'entraînement sortant de l'espace intérieur (6),
**caractérisé en ce que** la surface de section transversale de la bouche de l'entrée (10), par laquelle le gaz d'entraînement afflue depuis un conduit d'acheminement, situé à l'intérieur de l'unité de support, dans le conduit d'entraînement (13) contenant les pales (5), est plus grande que la surface de section transversale du conduit d'acheminement au niveau de son point de plus petite section transversale.

2. Moteur de turbine selon la revendication 1, **caractérisé en ce que** la roue de turbine (3) en forme de disque est disposée à une des extrémités de l'arbre d'entraînement (2), et **en ce que** la couronne de pales (5), à travers laquelle le fluide circule radialement, est formée sur la roue de turbine (3) sur une zone annulaire, située à proximité du pourtour du disque, de sa face frontale (4) axiale orientée vers l'arbre d'entraînement (2).

3. Moteur de turbine selon l'une quelconque des revendications précédentes, **caractérisé en ce qu'**au moins une ouverture de sortie pour le gaz d'entraînement est prévue dans le carter (1) de l'unité de support au niveau d'un emplacement radialement éloigné de l'arbre d'entraînement (2).

4. Moteur de turbine selon la revendication 3, **caractérisé en ce qu'**il est prévu des conduits de sortie (16) menant radialement à travers le carter (1).

5. Moteur de turbine selon la revendication 2, **caractérisé en ce que** l'arbre d'entraînement (2) est réalisé sous la forme d'un arbre creux pour pouvoir visser dans son autre extrémité le bol de pulvérisation.

6. Moteur de turbine selon l'une quelconque des revendications précédentes, **caractérisé en ce que** le poids de l'ensemble de l'unité motrice, interchangeable en tant qu'unité modulaire, sans le bol de pulvérisation, est inférieur à 0,8 kg.

7. Atomiseur rotatif d'une installation de revêtement en série de pièces, comportant un moteur de turbine selon l'une quelconque des revendications précédentes.
